# EUROPÄISCHE PATENTSCHRIFT

(11) **EP 0 968 943 B1**
(45) Veröffentlichungstag und Bekanntmachung des Hinweises auf die Patenterteilung: **23.04.2003**
(21) Anmeldenummer: 99810555.5
(22) Anmeldetag: 24.06.1999
(51) Int. Cl.: B65G 69/28

(54) **Auffahrschiene für Lasten, beispielsweise zum Beladen von Fahrzeugen**
Loading ramp for cargo, for example for loading vehicles
Rampe de chargement pour charges, par exemple pour le chargement de véhicules

(30) Priorität: 30.06.1998 DE 29811579 U
(43) Veröffentlichungstag der Anmeldung: 05.01.2000
(73) Patentinhaber: Alcan Technology & Management AG, 8212 Neuhausen am Rheinfall (CH)
(72) Erfinder: Bank, Werner, 78315 Radolfzell (DE); Kemen, Hans-Jörgen, 78224 Singen (DE)

(56) Entgegenhaltungen:
- DE-A- 2 106 972
- DE-B- 1 224 204
- DE-B- 1 228 196

## Beschreibung

Die Erfindung betrifft eine Auffahr-schiene für Lasten, beispielsweise zum Beladen von Fahrzeugen, nach dem oberbegriff des Anspruchs 1.

Derartige Auffahrschienen werden üblicherweise aus Leichtmetall, insbesondere einer Aluminiumlegierung, stranggepreßt. Die Auffahrschiene wird auf der Ladefläche mitgeführt und im Gebrauchsfall in einer Benutzungslage zwischen Fahrgrund und der erhöht liegenden Ladefläche in einem Neigungswinkel festgelegt. Nach dem Gebrauch wird die Auffahrschiene wieder auf die Ladefläche geschoben und dort verstaut. Die Reibung zwischen letzterer und der Auffahrschiene bedingt -- in Abhängigkeit von ihrem Gewicht -- erheblichen Kraftaufwand.

Aus der DE 12 24 204 B sind für Verladebleche Konstruktionen mit Rollen in Rollenhaltern bekannt geworden, wobei die Rollen in zu einem das Kippen eines Verladebleches erleichternden Abstand zur Längsseite des Verladebleches stehen müssen.

In der DE 21 06 972 A ist eine Brückenplatte mit Rädern zum Befördern derselben beschrieben. An der Brückenplatte weisen Räder nach vorne, resp. es sind in weiterer Ausführungsform weitere Rollen, in einem Abstand vorstehend, mit den Achsen parallel zur Brückenfläche und rechtwinklig zur Brückenlängsachse gehalten, genannt.

In Kenntnis dieser Gegebenheiten hat sich der Erfinder das Ziel gesetzt, eine Auffahrschiene der eingangs beschriebenen Art so zu gestalten, daß der Stauvorgang ohne großen Kraftaufwand mit einfachen Mitteln möglich ist.

Zur Lösung dieser Aufgabe führt die Lehre nach dem unabhängigen Anspruch, die Unteransprüche erfassen weitergehende Ausbildungen der erfindungsgemäßen Auffahrschiene.

Erfindungsgemäß wird die Auffahrschiene dadurch verbessert, daß von einer seitlichen Außenfläche -- gegebenenfalls der Außenfläche des Seitenprofils -- zumindest ein Drehkörper wenigstens teilweise abragt. Vorteilhafterweise ist dazu im Seitenprofil nahe dessen einem Ende eine Kugelrolle drehbar gelagert, die mit einem Kalottenabschnitt von die Außenfläche einer Seitenwand des Seitenprofils überragt. Gegebenenfalls ist eine solche Kugelrolle auch am anderen Schienenende vorgesehen.

Dank dieser Maßgabe kann die Auffahrschiene hochkant zur Ladefläche eingerichtet und dann auf der Kugelrolle verfahren werden. Die beim Verschieben von Auffahrschienen bislang aufgetretenen Reibungskräfte sind so beseitigt.

Nach einem weiteren Merkmal der Erfindung wird in das Seitenprofil bzw. in eine Ausnehmung von diesem ein quaderartiger Lagerkörper eingeschoben und darin -- insbesondere austauschbar -- festgelegt. Im Lagerkörper liegt drehbar jene Kugelrolle und ist bevorzugt kugelgelagert.

Im Rahmen der Erfindung liegt, daß die Kugelrolle bzw. ihr Lagerkörper von einem Hohlprofil des Seitenprofils aufgenommen wird, das bevorzugt an jeder seiner Längskanten ein solches Hohlprofil besitzt. Zwischen diesen Hohlprofilen besteht ein Längsspalt, der jeweils ein Ende von die Auffahrfläche anbietenden Querprofilen aufnimmt.

Eine zusätzliche Hilfe gegen Schäden durch Reibungskräfte ist in einem Verbundprofil -- aus einer Leichtmetallkomponente und einem damit metallisch verbundenen Stahlband -- zu sehen; letzteres ist verhältnismäßig abriebsicher und die Leichtmetallkomponente kann problemlos thermisch mit der Auffahrschiene verbunden werden. Es genügen verhältnismäßig kleine Abschnitte des Verbundprofils, um den Abrieb erheblich zu reduzieren. Für den Einsatz solcher -- als Stromschienen oder als Schweißverbinder bekannten -- Verbundprofile wird gesondert Schutz begehrt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf eine Auffahr-schiene;
- Fig. 2:: eine andere Ausführung der Auffahr-schiene in Seitenansicht;
- Fig. 3:: die Draufsicht auf die Auffahrschiene der Fig. 2;
- Fig. 4:: einen gegenüber Fig. 2, 3 vergrößerten Teilquerschnitt der Auffahrschiene gemäß Schnittlinie IV-IV in Fig. 3;
- Fig. 5:: ein anderes Detail der Auffahrschiene in einer Schnittdarstellung.

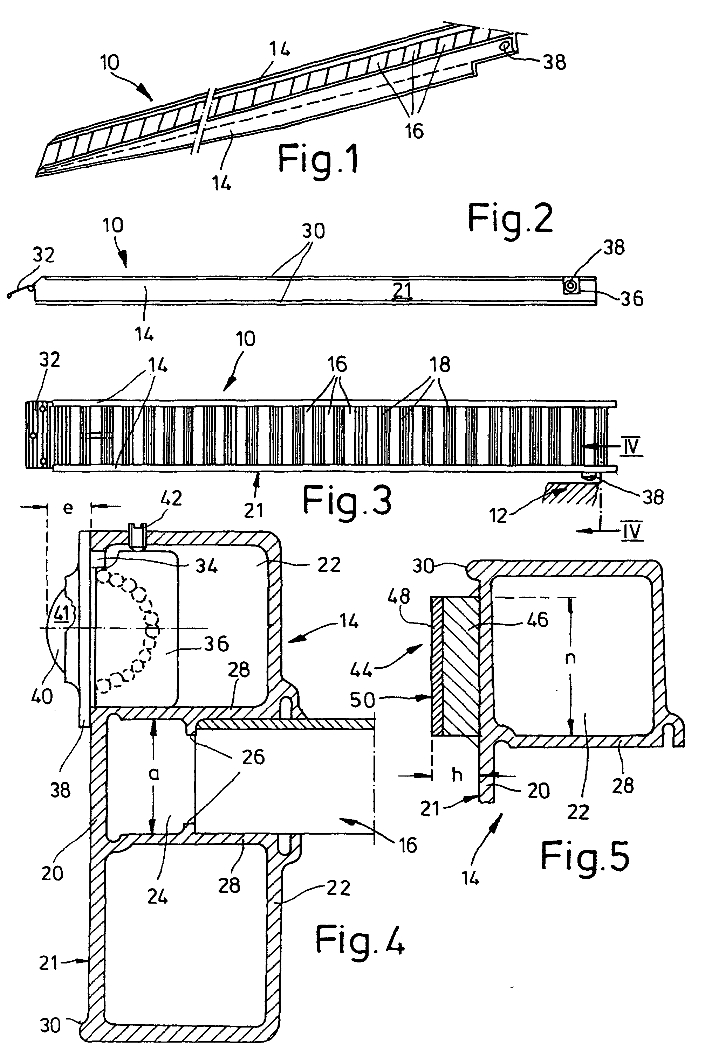

Eine Verlade- bzw. Auffahrschiene 10 -- für eine bei 12 nur angedeutete Ladefläche eines Transportfahrzeuges -- ist aus zwei stranggepreßten Seitenprofilen 14 und zwischen diesen angeordneten, ebenfalls aus einer Aluminiumlegierung stranggepreßten Querprofilen 16 zusammengesetzt; letztere bilden eine Auffahrfläche. Diese kann gemäß Fig. 3 mit Querrippen 18 versehen sein.

Jedes der Seitenprofile 14 weist in Fig. 4 zwei aus einer gemeinsamen Seitenwand 20 in Abstand a zueinander herausgeformten Kastenprofile 22 etwa quadratischen Querschnittes auf, die zwischen sich einen Einschubschlitz 24 für die Querprofile 16 anbieten.

Diese werden bis zu zwei Anschlagrippen 26 -- die von den Einschubschlitz 24 begleitenden Profilwandungen 28 abragen - - in das jeweilige Seitenprofil 14 eingeschoben. Die Außenfläche 21 der Seitenwand 20 wird von zwei Längsrippen 30 begrenzt.

Das in Gebrauchsstellung bodenwärtige Ende der Auffahrschiene 10 ist in Fig. 2, 3 mit einem zur Auffahrfläche geneigten Auffahrblech 32 ausgestattet. Am anderen Ende ist in eine Ausnehmung 34 einer der Seitenwände 20 der Auffahrschiene 10 ein quaderartiger Lagerkörper 36 mit die Ausnehmung abdeckender und rundum übergreifender Lagerplatte 38 für eine Kugelrolle 40 eingefügt, die ihrerseits im Lagerkörper 36 kugelgelagert ist. Letzterer ist mit Schrauben 42 im oberen Kastenprofil 22 festgelegt. Das Kragmaß e zwischen der eine Kalotte bildenden Oberfläche 41 der Kugelrolle 40 und Außenfläche 21 entspricht etwa einem Drittel des Kugeldurchmessers.

Soll die Auffahrschiene 10 verschoben werden, wird sie hochkant -- also gemäß Fig. 3 mit zur Ladefläche 12 paralleler Außenfläche 21 -- eingerichtet, so daß die Kugelrolle 40 als Gleithilfe zu dienen vermag und der Bedienungsperson den Schubvorgang erheblich erleichtert.

Fig. 5 zeigt einen anderen Schnitt durch das obere Kastenprofil 22 mit einem auf dessen Außenfläche 21 angeschweißten Verbundprofil 44 der bevorzugten Höhe h von 13 mm, dessen Grundkörper 46 einer Seitenlänge n von hier etwa 40 mm aus einer Aluminiumlegierung -- etwa AlMgSi1 --besteht, mit dem durch einen Strangpreßvorgang ein Stahlband 48 metallisch verbunden ist. Dessen harte Oberfläche 50 schützt die Außenfläche 21 der Seitenwand 20 bei einem Schubvorgang.

Nicht dargestellt ist eine Ausführung bei der eine beschriebene Kugelrolle 40 an beiden Enden der Seitenwand vorgesehen ist; durch diese Ausgestaltung wird die Handhabung der Auffahrschiene weitergehend vereinfacht.

## Patentansprüche

1. Auffahrschiene für Lasten, beispielsweise zum Beladen von Fahrzeugen, mit einer zwischen einem Fahrgrund und einer Ladefläche od. dgl. Lastebene geneigt verlaufenden Auffahrfläche, wobei von einer seitlichen Aussenfläche der Auffahrschiene zumindest ein Drehkörper abragt,
**dadurch gekennzeichnet, dass**
in einer Längsseite bzw. in einem Seitenprofil (14) der Auffahrschiene (10) nahe dessen einem Ende ein Lagerkörper (36) eingefügt ist, in welchem eine Kugelrolle (40) drehbar kugelgelagert ist, wobei die Kugelrolle mit einem Kalottenabschnitt von der Aussenfläche (21) einer Seitenwand (20) des Seitenprofils (14) abragt.

2. Auffahrschiene nach Anspruch 2, **dadurch gekennzeichnet, dass** in der Längsseite bzw. in dem Seitenprofil (14) der Auffahrschiene (10) nahe dessen beiden Enden jeweils zumindest ein Lagerkörper (36) eingefügt ist, in welchem eine Kugelrolle (40) drehbar kugelgelagert ist, wobei die kugelrollen jeweils mit einem kalottenabschnitt von der Aussenfläche (21) der Seitenwand (20) des Seitenprofils (14) abragen.

3. Auffahrschiene nach Anspruch 1, **dadurch gekennzeichnet, daß** der Lagerkörper (36) austauschbar im Seitenprofil (14) festgelegt ist.

4. Auffahrschiene nach einem der Ansprüche 1 bis 3, **dadurch gekennzeichnet, daß** das Seitenprofil (14) wenigstens ein Hohl-profil (22) zur Aufnahme der Kugelrolle (40) bzw. ihres im Seitenprofil festliegenden Lagerkörpers (36) enthält.

5. Auffahrschiene nach einem der Ansprüche 1 bis 4, **dadurch gekennzeichnet, daß** der Lagerkörper (36) mit einer Lagerplatte (38) versehen ist, welche eine Ausnehmung (34) in der Längsseite bzw. dem Seitenprofil (14) abdeckend übergreift und von welcher ein kalottenartiger Abschnitt der Kugelrolle (40) abragt.

6. Auffahrschiene nach Anspruch 4 oder 5, **dadurch gekennzeichnet, daß** aus einer Seitenwand (20) des Seitenprofils (14) in Abstand (a) zueinander zwei Hohl-profile (22) herausgeformt sind, zwischen welche Querprofile (16) der Auffahrschiene (10) einfügbar sind.

7. Auffahrschiene nach einem der Ansprüche 1 bis 6, **dadurch gekennzeichnet, daß** mit der Außenfläche (21) des Seitenprofils (14) eine Leichtmetallkomponente (46) eines Verbundprofils (44) kraftschlüssig verbunden und die andere Komponente des Verbundprofils ein Stahlband (48) ist.

8. Auffahrschiene nach Anspruch 7, **dadurch gekennzeichnet, daß** die Seitenlänge (n) des Verbundprofils (44) etwa der Seitenlänge des Lagerkörpers (36) entspricht.

## Claims

1. Run-on rail for loads, for example for the loading of vehicles, with a run-on face which extends at an inclination between a base and a loading surface or similar loading plane, at least one rotating body projecting from one outer side face of the run-on rail, **characterised in that** a bearing body (36), in which a spherical castor (40) is rotatably mounted by ball bearings, is inserted in one longitudinal side or in one side profile (14) of the run-on rail (10) near one of its ends, the spherical castor projecting with a spherical sector from the outer face (21) of a side wall (20) of the side profile (14).

2. Run-on rail according to claim 1, **characterised in that** at least one respective bearing body (36), in which a spherical castor (40) is rotatably mounted by ball bearings, is inserted in the longitudinal side or in the side profile (14) of the run-on rail (10) near its two ends, the spherical castors each projecting with a spherical sector from the outer face (21) of the side wall (20) of the side profile (14).

3. Run-on rail according to claim 1, **characterised in that** the bearing body (36) is secured interchangeably in the side profile (14).

4. Run-on rail according to any of claims 1 to 3, **characterised in that** the side profile (14) contains at least one hollow profile (22) for receiving the spherical castor (40) or its bearing body (36) secured in the side profile.

5. Run-on rail according to any of claims 1 to 4, **characterised in that** the bearing body (36) is provided with a bearing plate (38) which overlaps and covers a recess (34) in the longitudinal side or the side profile (14) and from which a spherical sector of the spherical castor (40) projects.

6. Run-on rail according to claim 4 or 5, **characterised in that** two hollow profiles (22) with mutual spacing (a) are shaped from a side wall (20) of the side profile (14), and transverse profiles (16) or the run-on rail (10) can be inserted therebetween.

7. Run-on rail according to any of claims 1 to 6, **characterised in that** a light metal component (46) of a composite profile (44) is non-positively connected to the outer face (21) of the side profile (14) and the other component of the composite profile is a steel strip (48).

8. Run-on rail according to claim 7, **characterised in that** the side length (n) of the composite profile (44) corresponds substantially to the side length of the bearing body (36).

## Revendications

1. Rampe de chargement pour charges, par exemple pour charger des véhicules, avec une surface de roulement s'étendant en pente entre une voie de roulement et une surface de chargement ou plan de chargement similaire, au moins un corps en rotation dépassant d'une surface extérieure latérale de la rampe de chargement,
**caractérisée en ce que**
un corps de palier (36) est inséré dans un côté longitudinal ou un profilé latéral (14) de la rampe de chargement (10) près d'une de ses extrémités, dans lequel une roulette (40) est montée à rotation sur roulement à billes, la roulette dépassant par une section en forme de calotte de la surface extérieure (21) d'une paroi latérale (20) du profilé latéral (14).

2. Rampe de chargement suivant la revendication 1, **caractérisée en ce qu'**un corps de palier (36) au moins est inséré respectivement dans le côté longitudinal et dans le profilé latéral (14) de la rampe de chargement (10) près de ses deux extrémités, dans lequel une roulette (40) est montée à rotation sur roulement à billes, les roulettes dépassant chacune par une section en forme de calotte de la surface extérieure (21) de la paroi latérale (20) du profilé latéral (14).

3. Rampe de chargement suivant la revendication 1, **caractérisée en ce que** le corps de palier (36) est fixé dans le profilé latéral (14) de manière interchangeable.

4. Rampe de chargement suivant l'une des revendications 1 à 3, **caractérisée en ce que** le profilé latéral (14) contient au moins un profilé creux (22) pour accueillir la roulette (40) ou son corps de palier (36) fixé dans le profilé latéral.

5. Rampe de chargement suivant l'une des revendications 1 à 4, **caractérisée en ce que** le corps de palier (36) est pourvu d'une plaque d'appui (38) qui fait prise à recouvrement dans un renfoncement (34) du côté longitudinal ou du profilé latéral (14) et duquel dépasse une section en forme de calotte de la roulette (40).

6. Rampe de chargement suivant la revendication 4 ou 5, **caractérisée en ce que** deux profilés creux (22) sont formés à distance (a) l'un de l'autre dans une paroi latérale (20) du profilé latéral (14), entre lesquels des profilés transversaux (16) de la rampe de chargement (10) peuvent être insérés.

7. Rampe de chargement suivant l'une des revendications 1 à 6, **caractérisée en ce qu'**un composant en métal léger (46) d'un profilé composite (44) est relié par transfert de force à la surface extérieure (21) du profilé latéral (14) et l'autre composant du profilé composite est une bande d'acier (48).

8. Rampe de chargement suivant la revendication 7, **caractérisée en ce que** la longueur (n) des côtés du profilé composite (44) correspond environ à la longueur de côté du corps de palier (36).
